# EUROPEAN PATENT SPECIFICATION

(11) **EP 0 680 650 B1**
(45) Date of publication and mention of the grant of the patent: **19.03.1997**
(21) Application number: 94901122.5
(22) Date of filing: 19.11.1993
(51) Int. Cl.: G09C 1/00

(54) **METHOD FOR SECRET NOTATION OF ALPHANUMERICAL ACCESS CODES AND DEVICE FOR PERFORMING THE SAME**
VERFAHREN ZUM CHIFFRIEREN VON ALPHANUMERISCHEN ZUGANGSCODES UND VORRICHTUNG DAFÜR
METHODE DE NOTATION CRYPTOLOGIQUE DE CODES D'ACCES ALPHANUMERIQUES ET DISPOSITIF DE REALISATION DE CETTE NOTATION

(30) Priority: 20.11.1992 SE 9203482
(43) Date of publication of application: 08.11.1995
(73) Proprietor: PETERSON, Leif, S-234 42 Lomma (SE)
(72) Inventor: PETERSON, Leif, S-234 42 Lomma (SE)
(74) Representative: Petri, Stellan
(86) International application number: SE9300989
(87) International publication number: WO9412966

(56) References cited:
- EP-A- 0 382 410

## Description

The invention refers to a method for secret registration of access codes and a device for performing this method.

In the modern society of today you are often compelled to memorize several different codes (access codes) which you have to know in order to carry out different functions. Examples of such codes are those which give access to buildings, premises or industrial estates, and those which makes it possible to use different types of credit cards, bank cards, gas credit cards etc. In order not to reveal the access code to an unauthorized person you are often warned not to keep the code in question in the vicinity of the card which the code is valid for. Thus, it is desirable for a person to keep these access codes without revealing them to those around him when at the same time the person concerned easily and rapidly has to produce the code.

In order to guarantee the secrecy when registrating access codes electronic as well as mechanical devices are known. An electronic variant can for example be based on an access code giving admittance by the information hidden in the device. After a certain number of attempts to get admission to the information entered, all of it is erased from the device. Registered access codes can also become deleted when the batteries run out. These electronic devices are expensive and are, in addition to the drawbacks mentioned, also bulky.

A mechanical memory aid for secretly storing alphanumerical sequences is described in EP-A2-382 410. This aid comprises a plurality of elements of which each carries a plurality of alphanumerical characters, the elements being assembled in a sequence which is chosen by the user so that selected, individual characters form a chosen pattern which can be identified by the user only. However, this aid is only an aid for the memory and the information in question can not be decoded. Furthermore, this variant is also bulky.

In order to improve the prospects of easily being able mechanically and secretly to register a plurality of access codes by a cheap, non-bulky device so that one or more of the access codes swiftly and easily can be obtained in text en clair with only one arbitrarily predetermined memory code there is according to the invention proposed a method of implementing such a secret registration as well as a device for accomplishing the same.

In order to explain the invention in more detail reference is made to the accompanying drawings, in which
FIG 1 is a plan view of a device according to the invention;
FIG 2 is a plan view of the device in Fig 1 when a specific access code is decoded;
FIG 3 and FIG 4 schematically show two variants of the device in Fig 1 in a perspective view;
FIG 5 is a perspective view of the device according to an alternative embodiment of the invention;
FIG 6 shows a slide of this device;
FIG 7 is a plan view of a device according to a third embodiment of the invention;
FIG 8 is a plan view of the invention according to Fig 7 without coding elements; and
FIG 9 is a plan view of a coding element according to Fig 7.

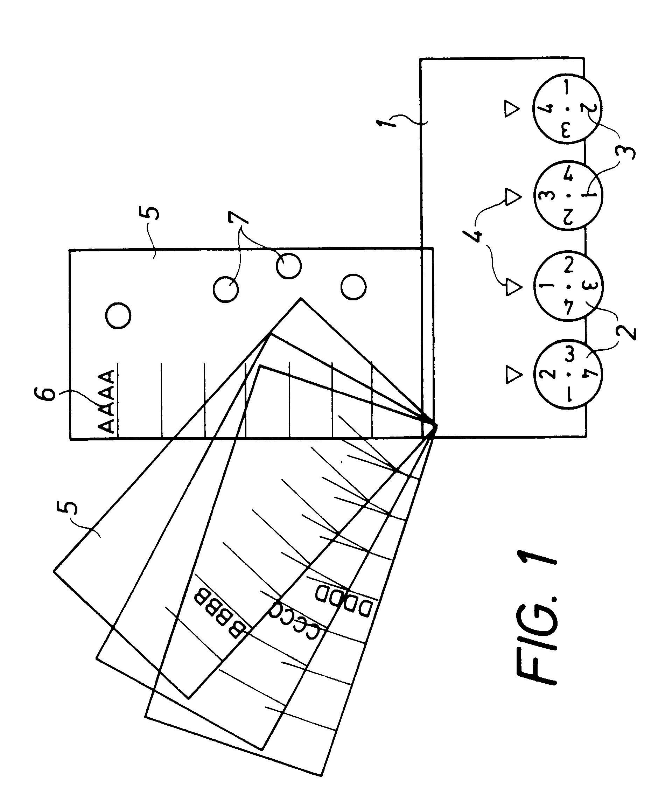

The embodiment shown in Fig 1 of the device according to the invention comprises a coding unit 1 with coding elements 2 arranged on one of its longer sides. The number of coding elements depends on the maximal number of symbols included among those access codes which are to be secretly registered. The coding elements are circular in shape and arranged to be turned. Alphanumerical symbols 3 are arranged along the periphery of each of the coding elements 2, the symbols being numerical and/or alphabetic characters in dependence of the type of access code which is to be registered. Usually numerals are used and their number is then ten, but for the sake of simplicity only four digits are presented in the figures. Above all the coding elements 2 permanent arrow marks 4 are arranged, against which an arbitarily predetermined memory code is set. One or more pattern elements 5 are turnably attached to the coding unit 1 so that each of them can be turned to and from a position, in which the coding element is covered by the pattern element. The pattern element 5 consists of a mask for covering the coding element 2, the associated access code being readable under the coding elements through the mask at markings 7. The masks are preferably made of transparent plastic or another material which makes the alphanumerical symbols 3 visible through the mask when it is placed over the coding unit. A denomination 6 is marked on all the pattern elements, the denomination referring to that function or card for which the access code of the pattern element is valid. Thus, each pattern element 5 refers to a specific access code which is to be secretly registered. When the coding elements by means of arrow marks 4 are set at specific positions corresponding to said predetermined memory code, a specific pattern of markings 7 - in positions corresponding to a specific access code - are applied on each pattern element 5 as each of them is turned to a position on top of the coding elements, the access code being read against the alphanumerical symbols of the coding elements set. If the masks, as mentioned above, are transparent the markings for a specific access code can, for example, consist of circles which are drawn on the individual pattern element around those alphanumerical symbols which belong to the access code in question. However, the masks can also be opaque and the markings for a specific access code can then consist of punchings in the individual pattern element. When the device for registration of access codes according to this embodiment is not used all the masks 5 are turned back over the coding unit 1, a thin package being obtained which requires little space and just as a credit card can be deposited, for example, in a wallet.

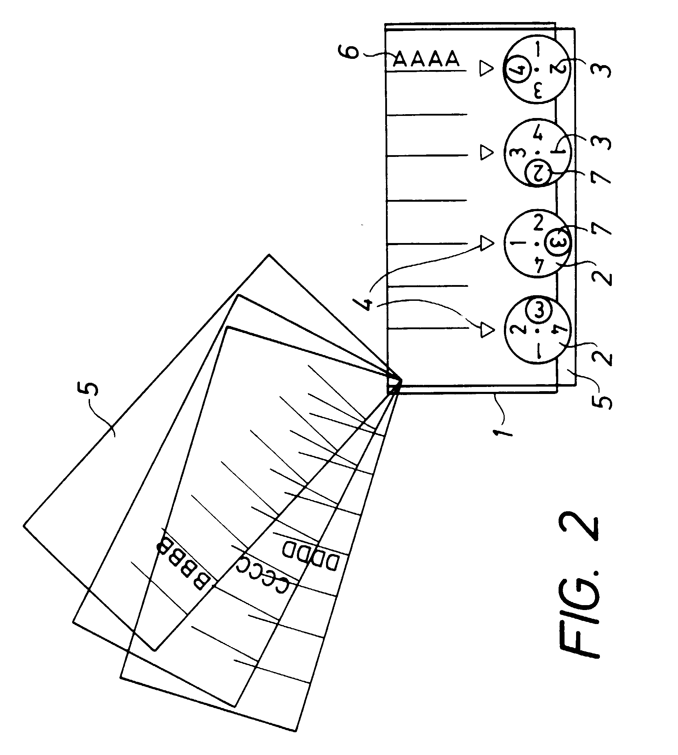

When carrying out the method according to the invention all the masks 5 are turned away from the coding unit 1 and the predetermined memory code for all secretly registered access codes are set with the coding elements 2 at the arrow marks 4. Then the mask with a denomination 6 corresponding to the access code in question is turned in over the coding unit 1 for covering the same, as shown in Fig 2. Now, the access code which corresponds to the chosen denomination 6 is obtained en clair by the coding element being read through the markings applied on the masks. In the example in Fig 2 the memory code is 2134 and the access code in question is 3324. When the code has been read, the coding elements 2 are turned away from those positions which correspond to the memory code.

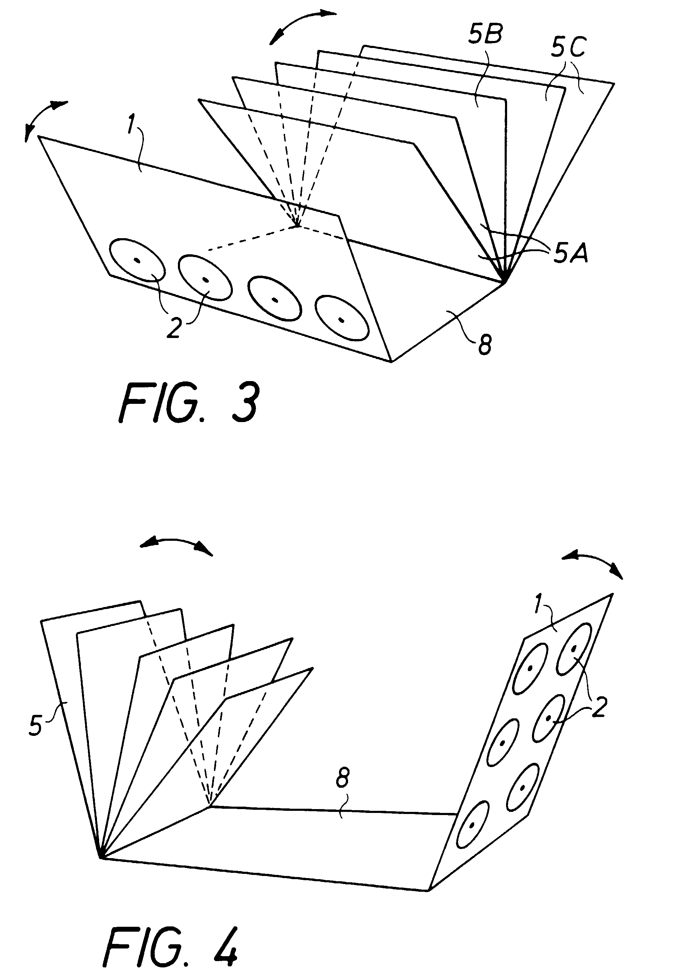

In one variant of this embodiment of the invention, Fig 3, the coding unit 1 and the masks 5A-5C, respectively, are arranged to be folded at opposite ends of a base plate 8. When carrying out the method according to the invention - after the predetermined memory code has been set with the coding elements 2 - the masks 5A placed in front of the mask 5B which corresponds to the access code in question are folded down against the base plate 8. Then the coding unit 1 is folded down over these masks and the mask 5B which corresponds to the access code in question is at last folded down over the coding unit 1, the access code being obtained en clair as described above. The masks 5C placed after the mask 5B are, however, not folded down.

In a further variant of this embodiment of the invention, Fig 4, the coding elements 2 are placed along both the longer sides of the coding unit 1.

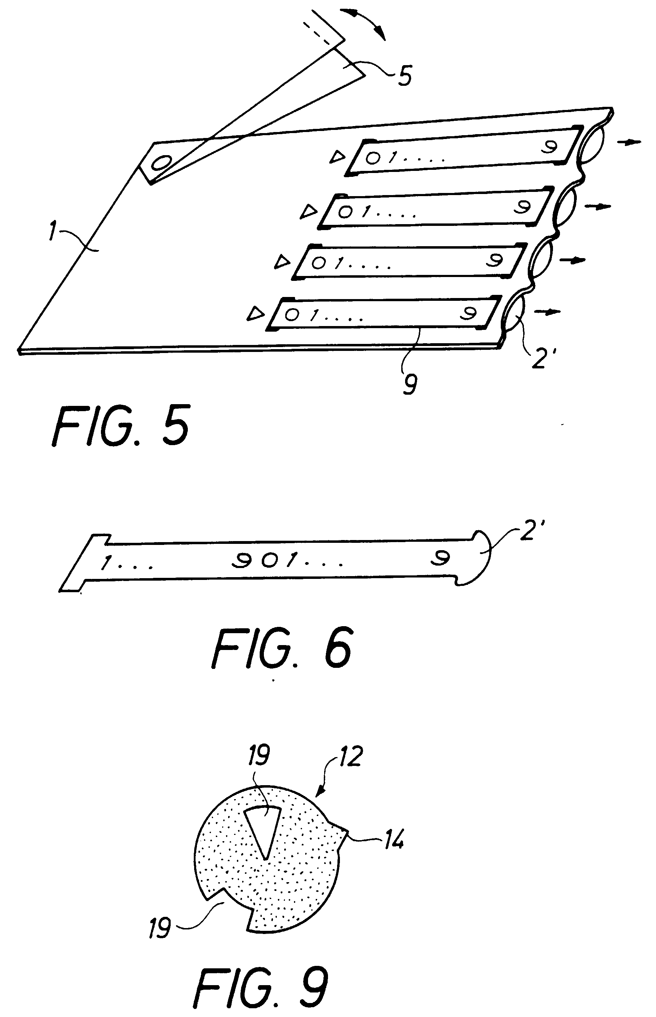

In an alternative embodiment of the invention, Fig 5 and 6, the coding elements 2 in the coding unit 1 are shaped as slides 2' which are arranged for sliding through windows 9. In this case two sets of the alphanumerical symbols 3 (for example the numerals 1-9) are arranged after each other but separated by the numeral zero. The window is so large that the numeral zero plus the total number of symbols in one set always are contained within the window 9 independent of how far the slide 2' is drawn out or pushed in, and the symbols can belong to both the first and the second set on both sides of the numeral zero.

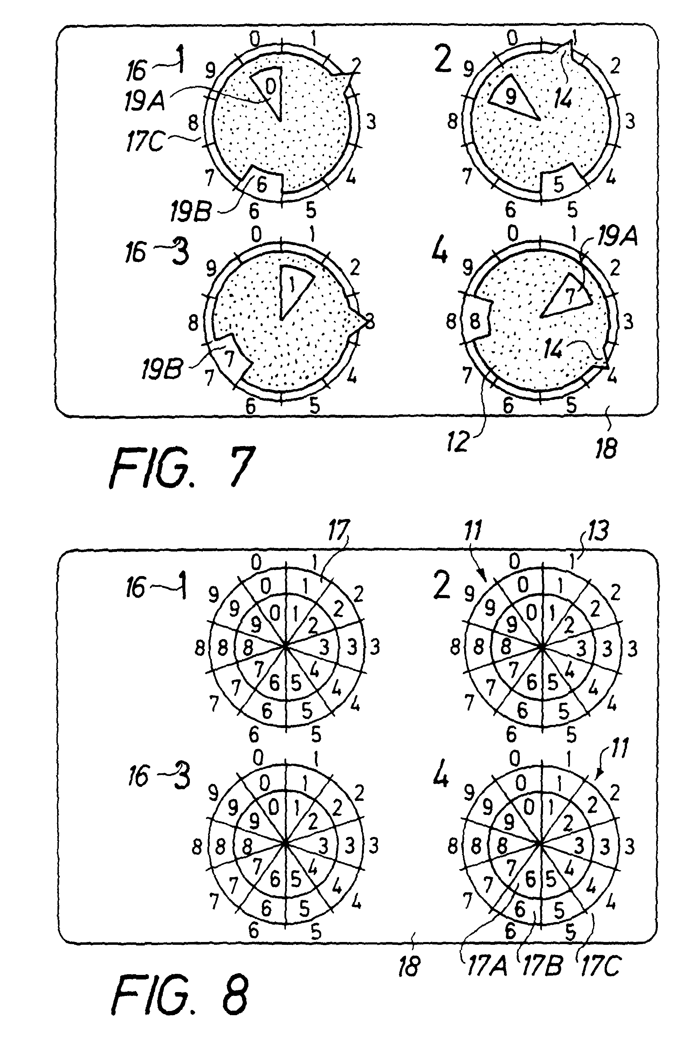

In Fig 7 a further embodiment of the invention is shown. Circular, rotary coding elements 12 are arranged on a base plate 18 over groups 11 of concentric circles 17 with alphanumerical symbols 13 in such a way that the coding elements do not cover the outermost concentric circles 17C of the groups 11. Denominations 16 close to the groups 11 indicate the reading order of the coding elements 12. The number of coding elements 12 and groups 11 corresponds to the maximum number of symbols which can be expected in a secretly registered access code. The number of concentric circles under a coding element, i.e. excluding the circle 17, corresponds to the number of registrable access codes which can be set. For simplicity, in addition to the circle 17C only two circles are shown, corresponding to two registrable access codes, but the number can, of course, be larger. Furthermore, the other side of the base plate 18 can be used in the same way. A possible design of the groups 11 of concentric circles with alphanumerical symbols 13 on the base plate 18 is shown in Fig 8.

As shown in Fig 7, each of the coding elements 12 is provided with an arrow mark 14, by means of which the predetermined memory code is set at the corresponding alphanumerical symbols of the outermost concentric circles 17C of the groups 11 in the order given by the denominations 16. Then, a window 19 for each individual alphanumerical symbol is made in each coding element by, for example, punching or scraping, as shown in Fig 9, the placing of these windows in relation to the arrow mark 14 being choosen in dependence of a numeral in an access code which is to be read on the device in one of the concentric circles. Thus, when the memory code (2134) by means of the arrow marks 14 of the coding elements is set against the numerals 2, 1, 3 and 4, respectively, in the outermost concentric circles 17C a first specific access code (0912) can be read through the windows 19A on the innermost circles 17A, and a second specific access code (6578) can be read through the windows 19B on the second innermost circles 17B and so on.

The base plate 18 as well as the coding element 12 can be made of plastic or another suitable material. When windows are made in the coding elements, they are suitably manufactured in a non-transparent material, but a transparent material can also be used for marking the alphanumerical symbols in form of, for example, circles which are drawn on the individual coding elements. In a further variant of this embodiment of the invention the coding elements can be made of a transparent material with an opaque layer which is scraped off to uncover a window in the positions intended.

Thus, with only one memory code, which of course has to be memorized, a large number of secretly registered access codes are available in the device. The access codes do not have to be memorized, a matter which can be quite burdensome.

The coding elements can be manufactured in other ways in addition to those shown here. However, a basic prerequisite of the invention must be fulfilled, i.e. all the alphanumerical symbols must be available on the coding unit so that a pattern of markings can be made.

## Claims

1. A method for secret registration of access codes,
**characterized** in that a number of coding elements (2) are set at specific positions corresponding to an arbitrarily predetermined memory code, and that, by means of a number of patterns of markings (7), each pattern being specific for an associated access code. the access code which corresponds to an individual pattern (5) is read at the markings (7) forming said individual pattern, when the coding elements (2) are set at said specific positions.

2. A method as claimed in claim 1,
**characterized** in that said patterns of markings are formed from said specific positions of the coding elements (2) by the markings (7) for a specific access code being applied when the coding elements (2) are set at said predetermined memory code.

3. A device for secret registration of access codes comprising a number of coding elements (2) which individually can be set so as to - in specific positions at alphanumerical symbols (3) - jointly indicate an arbitrarily predetermined memory code, **characterized** in that each access code is readable against the alphanumerical symbols (3) with a pattern of markings (7) specific for said access code when said elements are set at said memory code.

4. A device as claimed in claim 3,
**characterized** in that the alphanumerical symbols (3) are arranged on the coding elements (2) and that the markings (7) are arranged on a number of pattern elements (5) which each can be brought together with the coding elements (2).

5. A device as claimed in claim 4,
**characterized** in that each pattern element (5) consists of a mask for covering the coding elements (2), the markings (7) corresponding to the associated access code being readable on the coding elements through the mask.

6. A device as claimed in claim 5,
**characterized** in that the masks are arranged to be turned to and from a position in which the coding elements (2) are covered.

7. A device as claimed in claim 5,
**characterized** in that the masks are arranged to be folded to and from a position in which the coding elements (2) are covered.

8. A device as claimed in any of claims 5-7,
**characterized** in that the masks are transparent and the markings for a specific access code consist of circles, arrows, dots or lines which are drawn on the associated pattern element (5).

9. A device as claimed in any of claims 5-7,
**characterized** in that the masks are opaque and the markings for a specific access code consist of punchings in the associated pattern element (5).

10. A device as claimed in any of claims 3-6,
**characterized** in that the coding elements (2) are circular in shape and arranged to be turned.

11. A device as claimed in claim 10,
**characterized** in that the coding elements (2) have alphanumerical symbols arranged along their peripheries.

12. A device as claimed in any of claims 3-6,
**characterized** in that the coding elements (2) are arranged as slides.

13. A device as claimed in claim 3, **characterized** in that the alphanumerical symbols are arranged on a base plate under the coding elements (2), and the markings are arranged in or on the coding elements so that the alphanumerical symbols can be read at these markings.

14. A device as claimed in claim 13, **characterized** in that the coding elements (2) consist of circular, rotary discs, and the alphanumerical symbols are arranged in concentric circles, one for each access code to be read.

15. A device as claimed in claim 14, **characterized** in that the discs are manufactured in a non-transparent material and windows are made in them.

16. A device as claimed in claim 14, **characterized** in that the discs are manufactured in an opaque material and windows are obtained in them by scraping.

## Patentansprüche

1. Verfahren zur geheimen Speicherung eines Zugriffscodes, dadurch gekennzeichnet, daß eine Anzahl von Codierungselementen (2) auf spezifische Positionen eingestellt werden, die einem willkürlich vorbestimmten Speichercode entsprechen, und daß mittels einer Anzahl von Mustern von Markierungen (7), wobei jedes Muster für einen zugehörigen Zugriffscode spezifisch ist, der Zugriffscode, der einem einzelnen Muster (5) entspricht, bei den Markierungen (7) gelesen wird, die das einzelne Muster bilden, wenn die Codierungselemente (2) auf die spezifischen eingestellt werden.

2. Verfahren nach Anspruch 1, dadurch gekennzeichnet, daß die Markierungsmuster aus den spezifischen Positionen der Codierungselemente (2) durch die Markierungen (7) für einen spezifischen Zugriffscode gebildet werden, der gerade angewendet wird, wenn die Codierungselemente (2) auf den vorbestimmten Speichercode eingestellt werden.

3. Vorrichtung zur geheimen Speicherung von Zugriffscodes mit einer Anzahl von Codierungselementen (2), die derart einzeln eingestellt werden können, daß sie - bei spezifischen Positionen bei alphanumerischen Zeichen (3) - gemeinsam einen willkürlich vorbestimmten Speichercode anzeigen, dadurch gekennzeichnet, daß jeder Zugriffscode gegenüber den alphanumerischen Zeichen (3) mit einem Muster von Markierungen (7) lesbar ist, die spezifisch für den Zugriffscode sind, wenn die Elemente auf den Speichercode eingestellt sind.

4. Vorrichtung nach Anspruch 3, dadurch gekennzeichnet, daß die alphanumerischen Zeichen (3) auf den Codierungselementen (7) angeordnet sind, und daß die Markierungen (7) auf einer Anzahl von Musterelementen (5) angeordnet sind, die jeweils mit den Codierungselementen (2) zusammengebracht werden können.

5. Vorrichtung nach Anspruch 4, dadurch gekennzeichnet, daß jedes Musterelement (5) aus einer Maske zum Abdecken der Codierungselemente (7) besteht, wobei die Markierungen (7) dem zugehörigen Zugriffscode entsprechen, der gerade auf den Codierungselementen (7) durch die Maske lesbar ist.

6. Vorrichtung nach Anspruch 5, dadurch gekennzeichnet, daß die Masken derart angeordnet sind, daß sie in eine und aus einer Position gedreht werden, in der die Codierungselemente (2) abgedeckt sind.

7. Vorrichtung nach Anspruch 5, dadurch gekennzeichnet, daß die Masken derart angeordnet sind, daß sie in eine und aus einer Position gefaltet werden, in der die Codierungselemente (2) abgedeckt sind.

8. Vorrichtung nach einem der Ansprüche 5-7, dadurch gekennzeichnet, daß die Masken transparent sind und die Markierungen für einen spezifischen Zugriffscode aus Kreisen, Pfeilen, Punkten oder Linien bestehen, die auf dem zugehörigen Musterelement (5) gezeichnet sind.

9. Vorrichtung nach einem der Ansprüche 5-7, dadurch gekennzeichnet, daß die Masken undurchsichtig sind und die Markierungen für einen spezifischen Zugriffscode aus Lochungen in dem zugehörigen Musterelement (5) bestehen.

10. Vorrichtung nach einem der Ansprüche 3-6, dadurch gekennzeichnet, daß die Codierungselemente (2) kreisförmig sind und angeordnet sind, um gedreht zu werden.

11. Vorrichtung nach Anspruch 10, dadurch gekennzeichnet, daß die Codierungselemente (2) alphanumerische Zeichen haben, die entlang ihrer Umfänge angeordnet sind.

12. Vorrichtung nach einem der Ansprüche 3-6, dadurch gekennzeichnet, daß die Codierungselemente (2) als Schieber angeordnet sind.

13. Vorrichtung nach Anspruch 3, dadurch gekennzeichnet, daß die alphanumerischen Zeichen auf einer Basisplatte unter den Codierungselementen (2) angeordnet sind und die Markierungselemente in oder auf den Codierungselementen derart angeordnet sind, daß die alphanumerischen Zeichen bei diesen Markierungen gelesen werden können.

14. Vorrichtung nach Anspruch 13, dadurch gekennzeichnet, daß die Codierungselemente (2) aus kreisförmigen drehbaren Scheiben bestehen und die alphanumerischen Zeichen in konzentrischen Kreisen angeordnet sind, und zwar in einem für jeden zu lesenden Zugriffscode.

15. Vorrichtung nach Anspruch 14, dadurch gekennzeichnet, daß die Scheiben in einem nicht-transparenten Material hergestellt sind und Fenster in ihnen ausgebildet sind.

16. Vorrichtung nach Anspruch 14, dadurch gekennzeichnet, daß die Scheiben in einem undurchsichtigen Material hergestellt sind und daß Fenster in ihnen durch Kratzen erhalten werden.

## Revendications

1. Procédé d'enregistrement secret de codes d'accès, caractérisé en ce que plusieurs éléments de codage (2) sont établis au niveau de positions spécifiques correspondant à un code de mémoire prédéterminé de manière arbitraire et en ce que par l'intermédiaire de plusieurs configurations de repères (7), chaque configuration étant spécifique d'un code d'accès associé, le code d'accès qui correspond à une configuration individuelle (5) est lu au niveau des repères (7) constituant ladite configuration individuelle, lorsque les éléments de codage (2) sont établis au niveau desdites positions spécifiques.

2. Procédé selon la revendication 1, caractérisé en ce que lesdites configurations de repères sont formées à partir desdites positions spécifiques des éléments de codage (2) par les repères (7) d'un code d'accès spécifique appliqué lorsque les éléments de codage (2) sont établis au niveau dudit code de mémoire prédéterminé.

3. Dispositif d'enregistrement secret de codes d'accès comportant plusieurs éléments de codage (2) qui peuvent être établis individuellement de manière à indiquer conjointement, dans des positions spécifiques à des symboles alphanumériques (3), un code de mémoire prédéterminé de manière arbitraire, caractérisé en ce que chaque code d'accès peut être lu contre les symboles alphanumériques (3) à l'aide d'une configuration de repères (7) spécifique pour ledit code d'accès lorsque lesdits éléments sont établis au niveau dudit code de mémoire.

4. Dispositif selon la revendication 3, caractérisé en ce que les symboles alphanumériques (3) sont agencés sur les éléments de codage (2) et en ce que les repères (7) sont agencés sur plusieurs éléments de configuration (5) qui chacun peuvent être réunis avec les éléments de codage (2).

5. Dispositif selon la revendication 4, caractérisé en ce que chaque élément de configuration (5) est constitué d'un masque destiné à recouvrir les éléments de codage (2), les repères (7) correspondant au code d'accès associé pouvant être lu sur les éléments de codage à travers le masque.

6. Dispositif selon la revendication 5, caractérisé en ce que les masques sont agencés pour être tournés vers une position et à partir d'une position dans laquelle les éléments de codage (2) sont recouverts.

7. Dispositif selon la revendication 5, caractérisé en ce que les masques sont agencés pour être pliés vers une position et à partir d'une position dans laquelle les éléments de codage (2) sont recouverts.

8. Dispositif selon l'une quelconque des revendications 5 à 7, caractérisé en ce que les masques sont transparents et les repères pour un code d'accès spécifique sont constitués de cercles, de flèches, de points ou de lignes qui sont tracés sur l'élément de configuration associé (5).

9. Dispositif selon l'une quelconque des revendications 5 à 7, caractérisé en ce que les masques sont opaques et les repères pour un code d'accès spécifique sont constitués de découpes dans l'élément de configuration associé (5).

10. Dispositif selon l'une quelconque des revendications 3 à 6, caractérisé en ce que les éléments de codage (2) ont une forme circulaire et sont agencés pour être tournés.

11. Dispositif selon la revendication 10, caractérisé en ce que les éléments de codage (2) ont des symboles alphanumériques agencés le long de leur périphérie.

12. Dispositif selon l'une quelconque des revendications 3 à 6, caractérisé en ce que les éléments de codage (2) sont agencés sous forme de coulisseaux.

13. Dispositif selon la revendication 3, caractérisé en ce que les symboles alphanumériques sont agencés sur une plaque de base située sous les éléments de codage (2), et les repères sont agencés dans les éléments de codage ou sur ceux-ci de telle sorte que les symboles alphanumériques peuvent être lus au niveau de ces repères.

14. Dispositif selon la revendication 13, caractérisé en ce que les éléments de codage (2) sont constitués de disques circulaires, rotatifs, et les symboles alphanumériques sont agencés dans des cercles concentriques, un pour chaque code d'accès à lire.

15. Dispositif selon la revendication 14, caractérisé en ce que les disques sont fabriqués dans un matériau non-transparent et des fenêtres sont agencées dans ceux-ci.

16. Dispositif selon la revendication 14, caractérisé en ce que les disques sont fabriqués dans un matériau opaque et des fenêtres sont obtenues dans ceux-ci par grattage.
